# EUROPEAN PATENT SPECIFICATION

(11) **EP 3 150 767 B1**
(45) Date of publication and mention of the grant of the patent: **15.01.2020**
(21) Application number: 16190932.0
(22) Date of filing: 27.09.2016
(51) Int. Cl.: E02F 3/36, A01B 59/06

(54) **UTILITY VEHICLE WITH LOCKING MECHANISM FOR ATTACHMENT OF IMPLEMENT TO LOADER SYSTEM**
NUTZFAHRZEUG MIT VERRIEGELUNGSMECHANISMUS ZUR BEFESTIGUNG EINES GERÄTES AM LADERSYSTEM
VÉHICULE UTILITAIRE AVEC MÉCHANISME DE VERROUILLAGE POUR LA FIXATION D'UN OUTIL AU SYSTÈME DE CHARGEMENT

(30) Priority: 29.09.2015 US 201562234607 P; 21.07.2016 US 201615216376
(43) Date of publication of application: 05.04.2017
(73) Proprietor: Deere & Company, Moline, IL 61265 (US)
(72) Inventor: Esqueda, Daniel, 64610 Monterrey (MX)
(74) Representative: Holst, Sönke

(56) References cited:
- DE-B- 1 156 023
- DE-B- 1 291 284
- GB-A- 1 475 202
- US-A- 5 685 689

## Description

### BACKGROUND

The present disclosure relates to a locking mechanism that selectively locks a loader attachment implement to a loader system.

DE 1 156 023 B discloses a front loader vehicle with an attachment carrier and a manually operable locking mechanism for locking a loader which is attached to the carrier. The locking tool comprises a cable mechanism, which is remotely operable from an operator station. The cable mechanism facilitates the remote movement of a locking pin into and out of a locking position by axial movement of the cable. The axial movement of the cable is provided by pivoting a lever around a pivot axis perpendicular to the cable axis.

A further loader locking mechanism is disclosed in DE 1 291 284 B, wherein a hydraulic actuator is used to remotely control a locking pin for locking and unlocking a loader tool to a loader carrier. The proposed mechanism requires hydraulic tools which are costly and complex.

### SUMMARY

A utility vehicle, e.g., a tractor, is often configured for selective attachment to a number of hydraulically actuated loader attachment implements. These independent loader attachment implements may take the form of, for example, a bucket, a hay bale fork, a grapple, a blade, or the like in order to perform a specific task desired by the operator of the utility vehicle. As part of the attachment/detachment process, a locking mechanism is manipulated by the operator to secure or unsecure the loader attachment implement to the tractor.

In one aspect, the disclosure provides a loader system for a utility vehicle. The utility vehicle includes a cab configured to seat an operator for control of the utility vehicle. The loader system includes a loader attachment implement and a loader attachment carrier to selectively couple the loader attachment implement to the utility vehicle. The loader system also includes a locking subassembly having an actuator positioned adjacent the cab and manually operable from the cab and a pin portion adjacent the loader attachment implement and movable in a first direction in response to actuation of the actuator between a locked position and an unlocked position. When the pin portion is in a locked position, the loader attachment implement uniformly moves with the loader attachment carrier, and when the pin portion is in an unlocked position, the loader attachment implement is non-uniformly movable with the loader attachment carrier.

In another aspect, the disclosure provides a manual locking subassembly for a loader system of a utility vehicle includes an actuator manually operable from an operator cab of the vehicle and a mechanical linkage extending from the actuator and affixed to a loader attachment carrier rotatable about an axis. Manipulation of the actuator in a first direction moves a linkage member of the mechanical linkage from a first position in which a loader attachment implement is uniformly movable with the attachment carrier to a second position in which the loader attachment implement is non-uniformly movable with the loader attachment carrier.

Other aspects of the disclosure will become apparent by consideration of the detailed description and accompanying drawings.

### BRIEF DESCRIPTION OF THE DRAWINGS

FIG. 1 is a front perspective view of a vehicle coupled to a loader attachment implement in the form of a bucket according to an embodiment of the disclosure.
FIG. 2 is a side view of the loader system of FIG. 1 including a locking mechanism.
FIG. 3 is a perspective view of a portion of the locking mechanism of FIG. 2 in an unlocked position.
FIG. 4 is a detailed view of a portion of FIG. 3 illustrating a pin portion of the locking mechanism disengaged from the loader attachment implement.
FIG. 5 is a perspective cross-sectional view illustrating an actuator portion of the locking mechanism of FIG. 2 in a first position.
FIG. 6 is a perspective cross-sectional view illustrating the actuator portion of the locking mechanism of FIG. 2 in a second position.
FIG. 7 is a perspective view of the portion of the locking mechanism of FIG. 3 in a locked position.
FIG. 8 is a detailed view of a portion of FIG. 7 illustrating the pin portion of the locking mechanism engaged with the loader attachment implement.
FIG. 9 is a flow chart illustrating a method of operating the locking mechanism of FIG. 2.
FIG. 10 is a perspective view of a loader system including a locking mechanism selectively coupled to a loader attachment implement in the form of a bucket according to another embodiment of the disclosure.
FIG. 11 is a perspective view of a portion of the locking mechanism of FIG. 10 in an unlocked position.
FIG. 12 is a detailed view of a portion of FIG. 11 illustrating a pin portion of the locking mechanism disengaged from the loader attachment implement.
FIG. 13 is a perspective view illustrating an actuator portion of the locking mechanism of FIG. 10 in a first position.
FIG. 14 is a perspective view illustrating the actuator portion of the locking mechanism of FIG. 10 in a second position.
FIG. 15 is a side view illustrating the locking mechanism exteriorly routed to a loader boom of the loader system of FIG. 10.
FIG. 16 is a perspective view of the portion of the locking mechanism of FIG. 11 in a locked position.
FIG. 17 is a detailed view of a portion of FIG. 15 illustrating the pin portion of the locking mechanism engaged with the loader attachment implement.

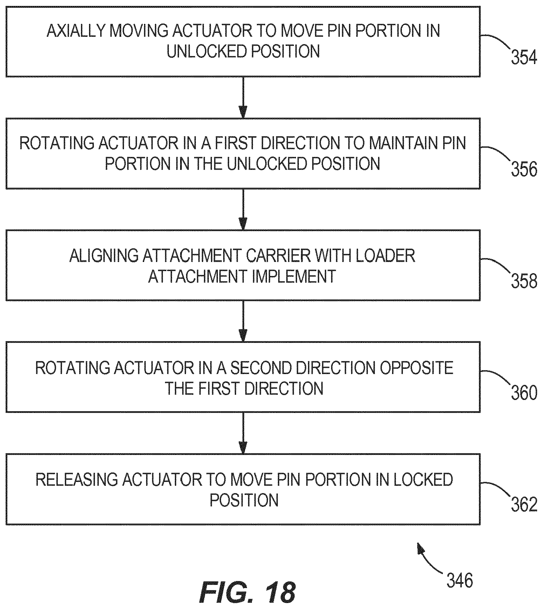

FIG. 18 is a flow chart illustrating a method of operating the locking mechanism of FIG. 10.

### DETAILED DESCRIPTION

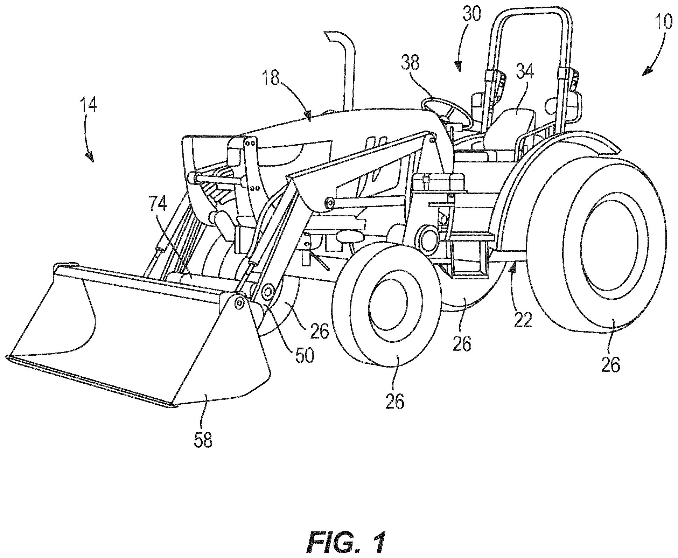

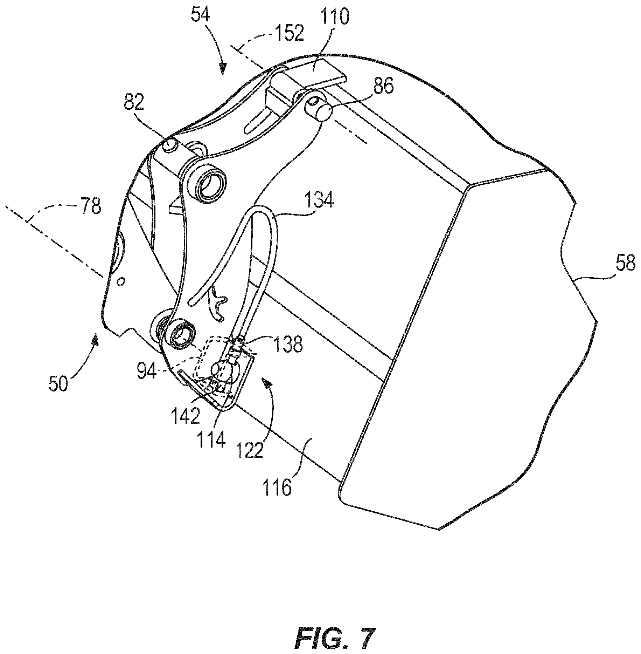

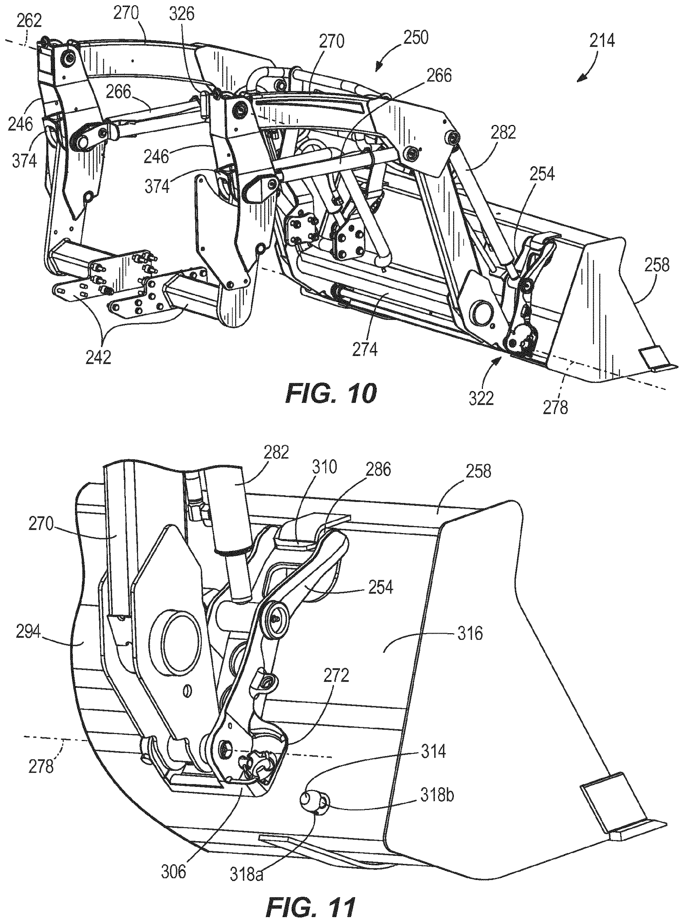

Before any embodiments of the disclosure are explained in detail, it is to be understood that the disclosure is not limited in its application to the details of construction and the arrangement of components set forth in the following description or illustrated in the following drawings. The disclosure is capable of supporting other embodiments and of being practiced or of being carried out in various ways. The embodiments set out in Figs 1 - 9 do not form part of the invention as claimed. The description associated with these embodiments serves to help understand the embodiments represented by Figs 10 - 17.

FIG. 1 illustrates a utility vehicle 10 with a loader system 14. The utility vehicle 10 is illustrated as a tractor; however, the utility vehicle 10 may be, for example, a skid steer, a riding lawn mower, or other utility vehicle. A prime mover 18 supplies torque through a transmission 22 to at least one of a plurality of wheels 26 to move the utility vehicle 10. Two of the wheels 26 may be powered by the prime mover 18 or all four wheels 26 may be powered by the prime mover 18. In other embodiments, the utility vehicle 10 may include more than four wheels with the prime mover 18 supplying torque to some or all of the wheels. In further embodiments, the wheels 26 may be replaced or modified with a continuous track. The prime mover 18 may include any power source to provide rotational driveline power, for example, an internal combustion engine, a hydraulic motor, a hydrostatic system, an electric motor, etc.

A cab area 30 provides an operator control of the utility vehicle 10. The illustrated cab 30 includes a chair 34, a steering wheel 38, and a plurality of controls. The operator is generally positioned in the chair 34 while steering the utility vehicle 10 via the steering wheel 38 and operating the plurality of controls. In other embodiments, the steering wheel 38 may comprise a plurality of levers to control the direction of movement of the utility vehicle 10 through the prime mover 18 and/or the transmission 22. The plurality of controls are also coupled to other components on the utility vehicle 10, e.g., a hydraulic system, an auxiliary drive shaft, etc. and may be in the form of electrical switches, mechanical actuators, or a combination thereof.

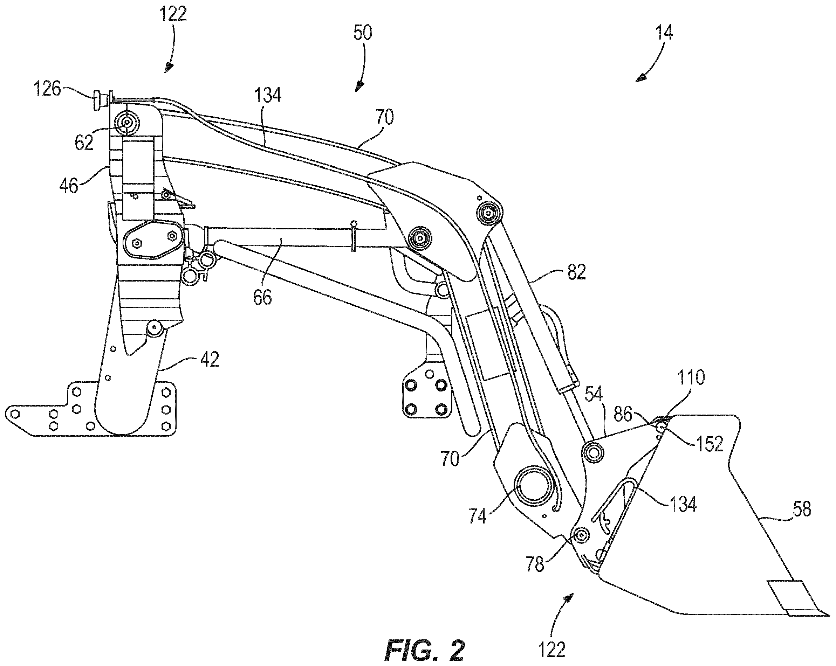

With further reference to FIG. 2, the loader system 14 is operable by the utility vehicle 10 and includes fixed frame members 42, detachable frame members 46, a loader boom 50, loader attachment carriers 54, and a loader attachment implement 58.

The fixed frame members 42 are each attached to a side of the utility vehicle 10 and in some embodiments may be a single integral component extending between both sides of the utility vehicle 10.

The illustrated frame members 46 are each selectively attachable to a respective fixed frame member 42. An actuator, e.g., a lever (not shown), may provide a locking mechanism between the detachable frame members 46 and the fixed frame members 42. The loader system 14 is therefore connected to the utility vehicle 10 by the connection between the frame members 42, 46. In the illustrated embodiment, the frame members 42, 46 are located between the wheels 26, e.g., front and back wheels and adjacent the cab 30. In particular, the operator positioned in the chair 34 of the cab 30 can, during vehicle operation, contact a portion of the detachable frame members 46, as will be described in detail below. In other embodiments, the frame members 42, 46 may be one integral member fixedly attached to the utility vehicle 10.

With continued reference to FIG. 2, the loader boom 50 is attached to the detachable frame members 46 about a first pivot axis 62. The illustrated loader boom 50 is operable to move about the first pivot axis 62 by boom hydraulic cylinders 66, which are attached between the detachable frame members 46 and the loader boom 50. The illustrated loader boom 50 defines two arms 70 each associated with a respective detachable frame member 46 on each side of the vehicle 10 with a support member 74 connecting the arms 70.

The attachment carriers 54 are secured to an associated arm 70 about a second pivot axis 78. Additionally, carrier hydraulic cylinders 82 extend from each arm 70 to a respective attachment carrier 54 and are operable by the hydraulic system of the utility vehicle 10 to rotate the attachment carriers 54 about the second pivot axis 78.

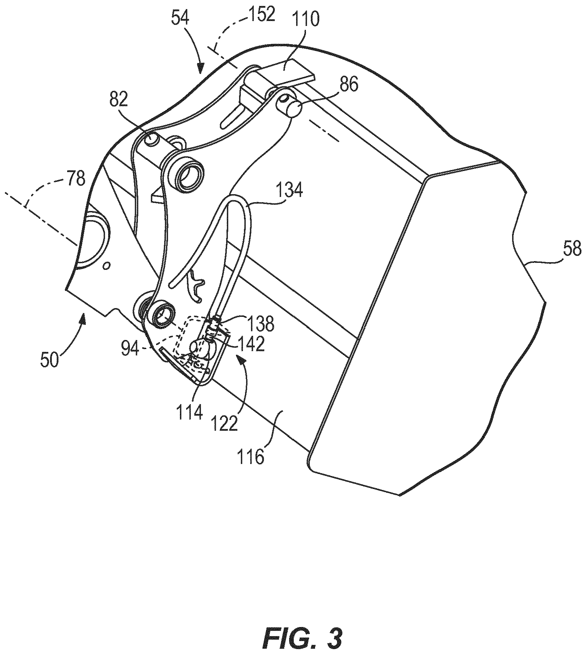

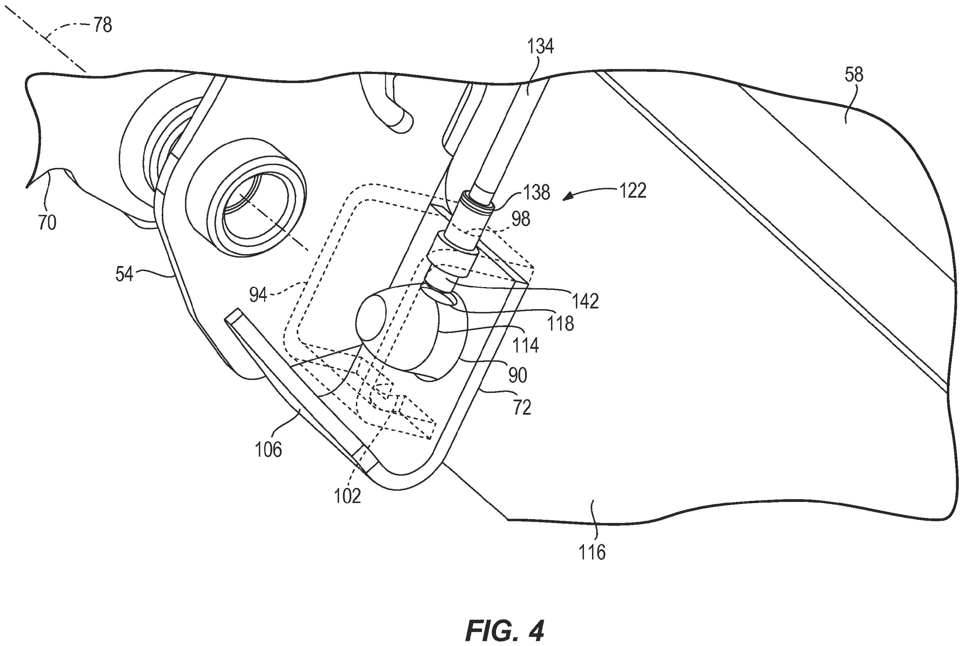

With reference to FIGS. 3 and 4, a lateral portion 72 of one of the attachment carriers 54 defines an opening 90 and forms a housing 94 surrounding the opening 90. The illustrated housing 94 defines a three-sided member with an upper aperture 98 aligning with an opposing lower aperture 102. The lateral portion 72 of the attachment carrier 54 that defines the opening 90 also defines a shield 106 positioned externally from the housing 94 to protect the housing 94 from damage during operation of the loader system 14. In other embodiments, both carriers 54 may include the opening 90 and the housing 94. In the illustrated embodiment, the housing 94 is coupled to the lateral portion 72 of the attachment carrier 54 and the shield 106 via a welding operation but may be formed by any suitable method in other embodiments.

The illustrated loader attachment implement 58 is illustrated as a bucket. In other embodiments, however, the loader attachment implement 58 may be a sweep cleaner, hay bale fork, hay bale hugger, grapple, scraper, pallet fork, debris blower, blade, snow pusher, or the like for performing a specific task. With reference to FIG. 3, hooks 110 are affixed to the loader attachment implement 58 and are configured to engage a respective engagement pin 86 of the attachment carrier 54. In addition, protrusions 114 extend from a rear face 116 of the loader attachment implement 58 and are sized to be received within the opening 90 of the attachment carrier 54 (FIG. 4). The protrusions 114 include an aperture 118 extending therethrough. The loader attachment implement 58 may include only one protrusion 114 that aligns with only one of the two attachment carriers 54. In other embodiments, a protrusion 114 on each side of the implement 58 may be employed to mate with an opening 90 in each attachment carrier 54.

With reference to FIGS. 2-4, a locking mechanism 122 attached to the loader system 14 provides operator control to lock or unlock the loader attachment implement 58 to the attachment carrier 54. In the illustrated embodiment, one locking mechanism 122 is attached to the loader system 14; however, in other embodiments, multiple locking mechanisms 122 may be attached to the loader system 14 on one or both sides of the vehicle 10.

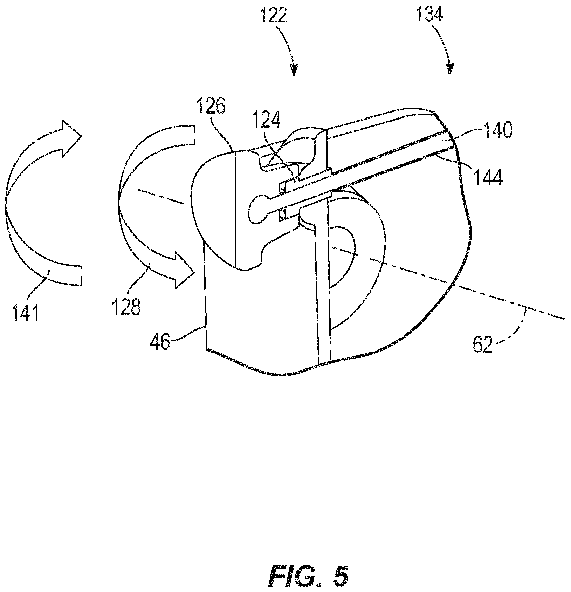

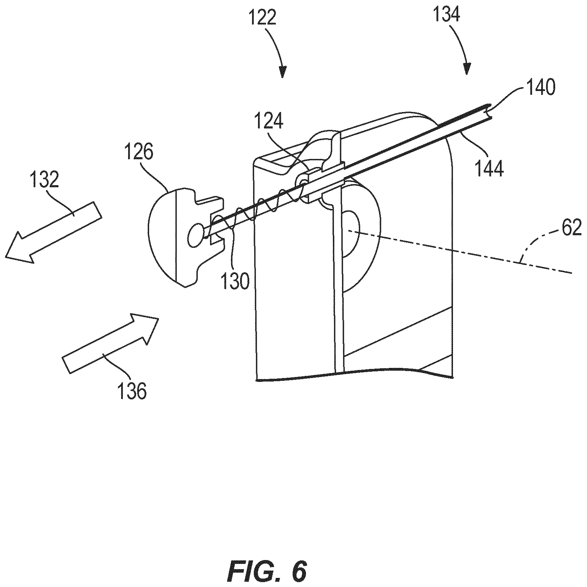

Referring also to FIG. 5, in one embodiment, the locking mechanism 122 includes a mechanical actuator 126 operably attached to one of the detachable frame members 46. The illustrated actuator 126 is positioned adjacent the cab 30 to facilitate operator usage from the cab 30. In particular, the actuator 126 is illustrated as a knob that engages a threaded fitting 124 of the detachable frame member 46. A biasing member 130 (FIG. 6) is coupled between the actuator 126 and the threaded fitting 124 to bias the actuator 126 towards the detachable frame member 46. The biasing member 130 as illustrated is a compression coil spring; however, in other embodiments, the biasing member 130 may be an elastic member, e.g., a sheath, a bushing, etc.

The actuator 126 is positionable in a locked position (FIG. 5) or an unlocked position (FIG. 6). The actuator 126 is rotatable in a first rotational direction 128, e.g., counterclockwise, to unlock the actuator 126 from the threaded fitting 124 to move the actuator 126 in a first axial direction 132 away from the detachable frame member 46. The actuator 126 is also movable in a second axial direction 136 and thereafter rotatable in a second rotational direction 141, e.g., clockwise, to lock the actuator 126 to the threaded fitting 124 and eliminate inadvertent axial movement of the actuator 126. In other embodiments, the actuator 126 may be in the form of a pivoting lever or T-handle mechanism.

The actuator 126 is attached to a mechanical linkage 134 in the form of a flexible sheathed cable assembly. The sheathed cable 134 is exteriorly routed along one of the arms 70 of the loader boom 50 (FIG. 2) and is secured to the attachment carrier 54 by a fitting 138 fixed within the upper aperture 98 (FIG. 4). In other embodiments, the sheathed cable 134 may be routed interiorly within one of the arms 70. The sheathed cable 134 is similar to a Bowden cable in that it comprises an inner cable body 140 within a sheath 144, with the inner cable 140 slidable relative to the sheath 144. In the illustrated embodiment, the inner cable 140 is an integral member continuous along the length of the sheathed cable 134 and is formed with or otherwise includes a pin portion 142 at least partially receivable within the fitting 138 (FIG. 4). Movement of the pin portion 142 is dependent upon movement of the actuator 126. In other embodiments, the pin portion 142 may be a separate portion of the inner cable 140 and more rigid than the inner cable 140 to inhibit shearing of the pin portion 142. The pin portion 142 is biased to extend from the fitting 138 by virtue of the interaction between the biasing member 130 and the actuator 126, but in further embodiments the previously described biasing member 130 may be alternatively located between the fitting 138 and the pin portion 142 to bias the pin portion 142 out of the fitting 138.

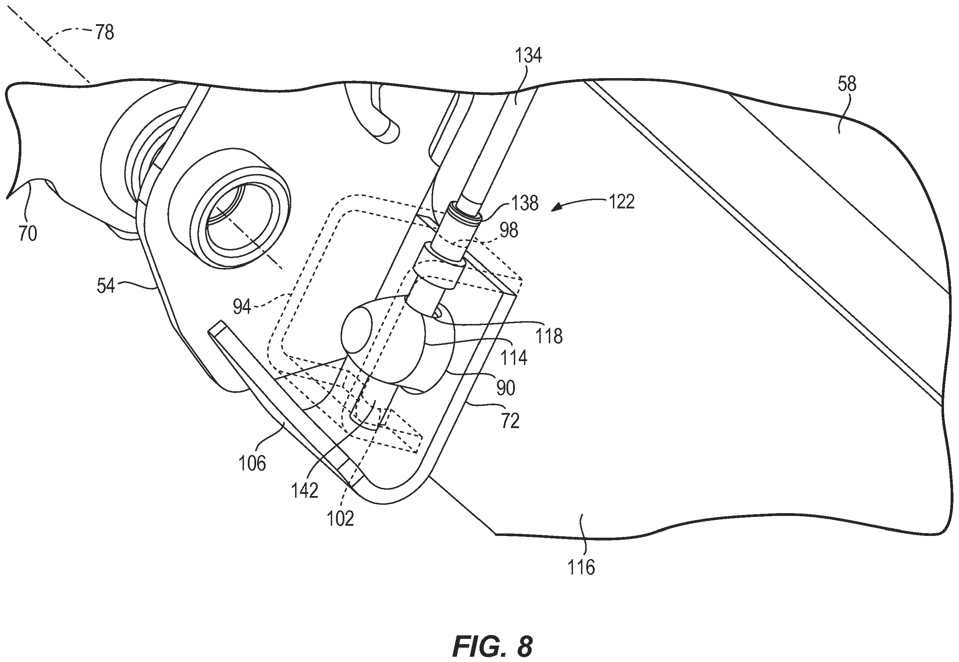

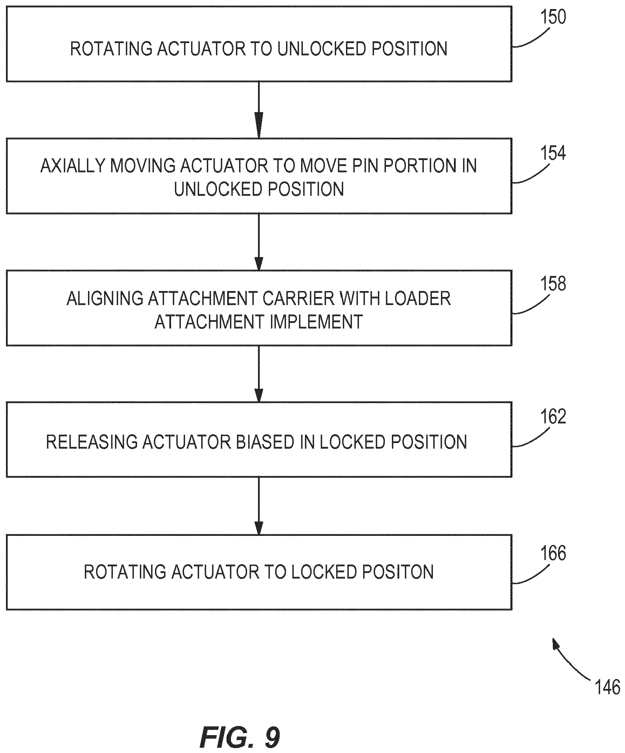

With reference to FIG. 9, one method 146 of connecting and/or disconnecting the loader attachment implement 58 from the attachment carrier 54 without the operator leaving the cab 30 is illustrated. The locking mechanism 122 is manually operable by the operator without utilizing additional power sources (e.g., hydraulics, motors, etc.). With a first attachment implement 58 operably coupled to the carrier 54 (FIG. 8), in step 150 the actuator 126 is rotated in the first rotational direction 128 (FIG. 5) for disengagement with the threaded fitting 124. The operator moves the actuator 126 (step 154) in the first axial direction 132 (FIG. 6). As a result, the actuator 126 acts against the biasing force of the biasing member 130 and moves the inner cable 140 within the sheath 144 such that the pin portion 142 clears the aperture 118 into the unlocked position (FIGS. 3 and 4). In other embodiments, the actuator 126 may be maintained in the extended position of FIG. 6, which allows the pin portion 142 to temporarily remain in the unlocked position without the operator's input.

Once unlocked, the first attachment implement 58 can be disconnected from the attachment carrier 54. The operator positions the first attachment implement 58 on the ground and then manipulates the attachment carrier 54 about the second pivot axis 78 to disengage the protrusion 114 from the opening 90. Thereafter, the attachment carrier 54 is rotatable relative to the first attachment implement 58 via engagement between the engagement pins 86 and the hooks 110 about a third pivot axis 152. The operator manipulates the loader boom 50 about the first axis 62 to detach the engagement pins 86 from the hooks 110.

To attach a second attachment implement 58, the operator aligns the engagement pins 86 with the hooks 110 of the second implement 58 by at least one of steering the utility vehicle 10 via the steering wheel 38, actuating the boom hydraulic cylinders 66 to rotate the loader boom 50 about the first pivot axis 62, and actuating the carrier hydraulic cylinders 82 to rotate the attachment carrier 54 about the second pivot axis 78. Once the pins 86 are coupled to the hooks 110, the second loader attachment implement 58 is rotatable relative to the attachment carrier 54 about the engagement pins 86. The operator then manipulates the attachment carrier 54 about the second pivot axis 78 such that the openings 90 rotate over the protrusions 114. In this position, the aperture 118 aligns with the pin portion 142 and the lower aperture 102 of the housing 94.

If no attachment implement 58 is to be first disconnected, step 158 may be performed in stages with steps 150, 154 between the stages. For example, the engagement pins 86 may first engage the hooks 110, steps 150, 154 may be performed, and then the protrusions 114 may be received within the openings 90.

The locking mechanism 122 is then operable to lock the second loader attachment implement 58 to the attachment carrier 54 for uniform co-rotational movement, e.g., an amount of rotational movement of the attachment carriers 54 is directly transferred to the second loader attachment implement 58. The operator releases the actuator 126 (step 162), which returns in the second axial direction 136 toward the threaded fitting 124 in response to the biasing member 130 (FIG. 6) and slides the inner cable 140 through the sheath 144. The pin portion 142 in response translates away from the fitting 138 and extends through the aperture 118 and at least through a portion of the lower aperture 102 (FIG. 8). Step 166 includes rotating the actuator 126 in the second rotational direction 141 to lock the actuator 126 to the threaded fitting 124 and thus maintain the pin portion 142 in a locked position. In other embodiments, the actuator 126 is not rotated, but otherwise actuated to a locked position.

FIGS. 10-17 illustrate a loader system 214 according to the invention as set out in the claims. The loader system 214 is similar to the loader system 14; therefore, similar components have been given similar reference numbers, plus 200. Only differences between the loader systems 14, 214 will be discussed in detail. In addition, components or features described with respect to only one or some of the embodiments described herein are equally applicable to any other embodiments described herein.

With reference to FIG. 10, the loader system 214 includes fixed frame members 242, detachable frame members 246, a loader boom 250, loader attachment carriers 254, and a loader attachment implement 258. Actuators 374, e.g., in the form of levers, may provide a locking mechanism between the detachable frame members 246 and the fixed frame members 242.

The loader boom 250 is attached to the detachable frame members 246 and is movable about a first pivot axis 262 by boom hydraulic cylinders 266. The illustrated loader boom 250 defines two arms 270 each associated with a respective detachable frame member 246, with a support member 274 connecting the arms 270. The attachment carriers 254 are secured to an associated arm 270 and are movable about a second pivot axis 278 by carrier hydraulic cylinders 282.

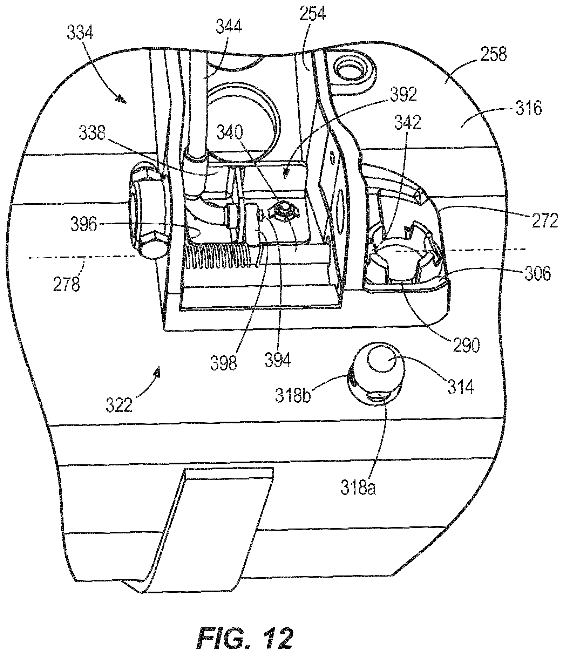

With reference to FIGS. 11 and 12, hooks 310 are affixed to the loader attachment implement 258 and are configured to engage a respective engagement portion 286 of the attachment carrier 254. Both attachment carriers 254 further define a lateral portion 272 having an opening 290 (only one attachment carrier 254 is shown in FIGS. 11 and 12). The lateral portion 272 of the attachment carrier 254 that defines the opening 290 also presents a shield 306.

Protrusions 314 extend from a rear face 316 of the loader attachment implement 258 and include a first (e.g., generally vertically oriented) aperture 318a and a second (e.g., generally horizontally oriented) aperture 318b transverse to aperture 318a. Each protrusion 314 is associated with a single attachment carrier 254. In one embodiment, the loader attachment implement 258 may only include one protrusion 314 associated with a single attachment carrier 254. In another embodiment, the (or each) protrusion 314 may only include one vertical (similar to the protrusion 114) or one horizontal aperture. In further embodiments, the protrusion 314 may include an aperture 318 oriented at an oblique angle relative to the illustrated apertures 318a, 318b. With reference back to the previous embodiment (FIGS. 1-9), for example, the pin portion 142 could be received within the vertical aperture 318a.

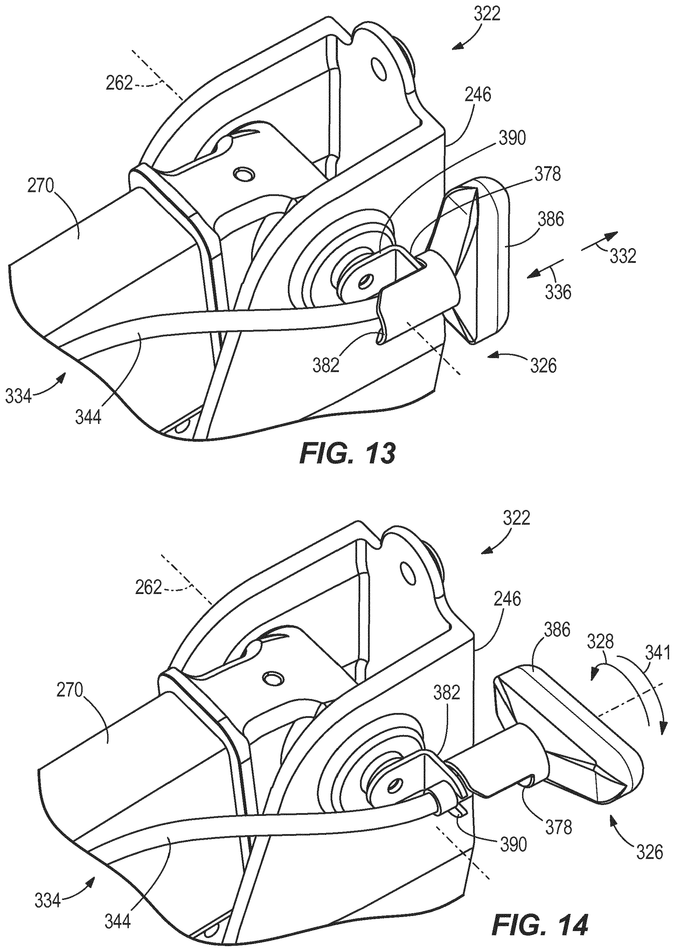

With reference to FIGS. 13 and 14, a locking mechanism 322 is attached to the loader system 214. The locking mechanism 322 includes a mechanical actuator 326 operably attached to one of the detachable frame members 246. The illustrated actuator 326 is positioned adjacent the cab 30 to facilitate operator usage from the cab 30. In particular, the actuator 326 includes a notch 378 located between an end portion 382 and a handle portion 386. The end portion 382 and the notch 326 selectively engage a bracket 390 affixed to the detachable frame member 246. In other embodiments, other actuator mechanisms may be utilized, for example, the locking mechanism may include an electrical button or switch adjacent the cab 30, or the actuator 326 may be a lever.

The actuator 326 is positionable in a locked position (FIG. 13) with the notch 378 contacting the bracket 390 or an unlocked position (FIG. 14) with the end portion 382 contacting or positioned adjacent the bracket 390. The actuator 326 is translatable in a first axial direction 332 away from the bracket 390 to permit rotation of the actuator 326 in a first rotational direction 328. The actuator 326 is also rotatable in a second rotational direction 341 and thereafter movable in a second axial direction 336. In the embodiments wherein the actuator 326 is a lever, the actuator 326 may not axially move, but rather the lever may pivot parallel to the first pivot axis 262 between a locked position (similar to FIG. 13) and an unlocked position (similar to FIG. 14).

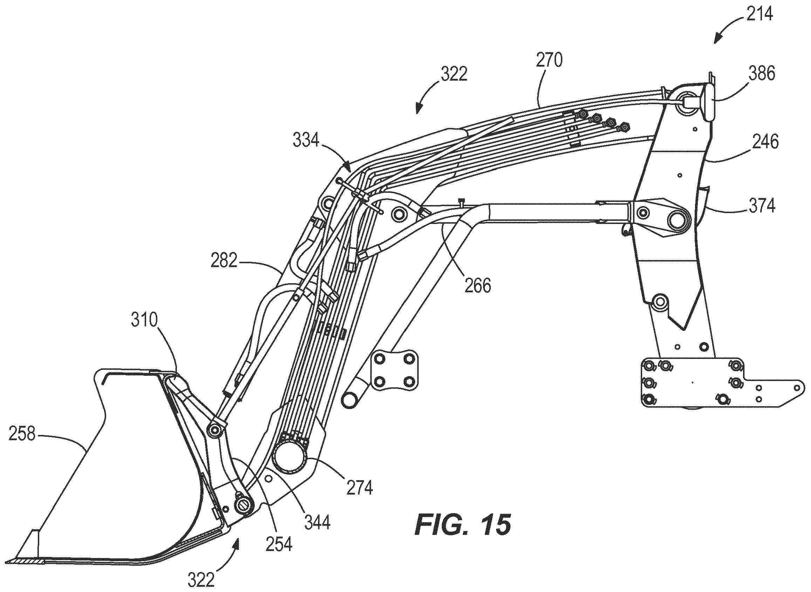

The actuator 326 is coupled to a mechanical linkage 334 in the form of a flexible sheathed cable assembly. In other embodiments, a more rigid linkage system may be utilized. The sheathed cable 334 is exteriorly routed along one of the arms 270 (FIG. 15) and is secured to the attachment carrier 254 by a bracket 338 (FIG. 12). The sheathed cable 334 includes an inner cable body or a linkage member 340 within a sheath 344 and a pin portion 342. An end portion 392 of the inner cable body 340 extending from the sheath 344 adjacent the bracket 338 passes through a laterally extending dowel or peg 398 of the pin portion 342 and includes a stop 394 that constrains retraction of the end portion 392 through the peg 398. A biasing member 330 abuts an inner wall 396 of the attachment carrier 254 and is operably coupled with the pin portion 342 to bias the pin portion 342 towards the lateral portion 272. In the illustrated embodiment, the biasing member 330 and the pin portion 342 are concentric. In other embodiments, the biasing member 330 may instead abut the bracket 338 and the peg 398 may be omitted such that the biasing member 330, a portion of the inner cable 340 including the stop 394, and the pin portion 342 are concentric, e.g., the stop 394 is located within the biasing member 330.

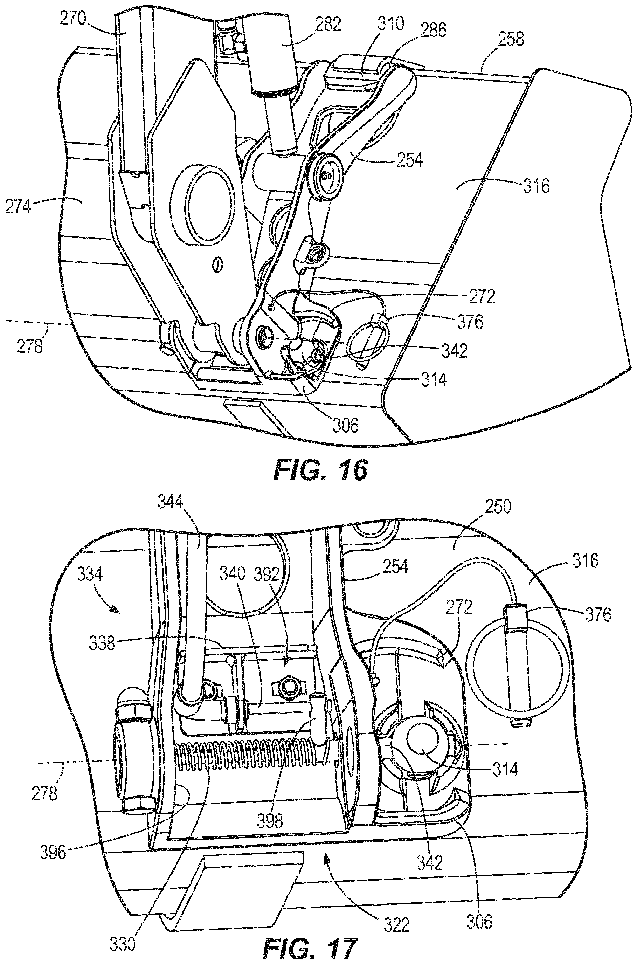

With reference to FIG. 17, a method 346 of connecting and/or disconnecting the loader attachment implement 258 from the attachment carrier 254 without the operator leaving the cab 230 is illustrated. With the hooks 310 coupled to the engagement portions 286 and the pin portion 342 received within the aperture 318b, a first attachment implement 258 is operably coupled to the carrier 254 (FIGS. 15 and 16). In step 354, the actuator 326 is moved in the first axial direction 332 (FIG. 13) such that the notch 378 is positioned away from the bracket 390 and the end portion 382 is positioned adjacent the bracket 390. As a result, the actuator 326 acts against the biasing force of the biasing member 330. In particular, the inner cable 340 moves within the sheath 344 with the stop 394 interacting with the peg 398 such that the pin portion 342 clears the aperture 318b into the unlocked position (FIGS. 11 and 12). In the illustrated embodiment, the pin portion 342 generally translates parallel to the second pivot axis 278. The actuator 326 is maintained in the extended position of FIG. 14 by rotating the actuator 326 in the first rotational direction 328 (step 356) such that the end portion 382 contacts the bracket 390, which allows the pin portion 342 to temporarily remain in the unlocked position without the operator's input. Once unlocked, the first attachment implement 258 can be disconnected from the attachment carrier 254, as previously described.

To attach a second attachment implement 258, the operator aligns the engagement portions 286 with the hooks 310 of a second implement 258 (step 358). Once the engagement portions 286 are coupled to the hooks 310, the second loader attachment implement 258 is rotatable relative to the attachment carrier 254 about the engagement portions 286. The operator then manipulates the attachment carrier 254 about the second pivot axis 278 such that the openings 290 rotate over the protrusions 314. In this position, the aperture 318b aligns with the pin portion 342.

The locking mechanism 322 is then operable to lock the second loader attachment implement 258 to the attachment carrier 254 for uniform co-rotational movement, e.g., an amount of rotational movement of the attachment carriers 254 is directly transferred to the second loader attachment implement 258. The operator rotates the actuator 326 (step 360) in the second rotational direction 341 to align the notch 378 with the bracket 390, and then releases the actuator 326 (step 362). The actuator 326 returns in the second axial direction 336 until the notch 378 contacts the bracket 390. The pin portion 342 in response extends through the aperture 318b under the force of the biasing member 330. In other embodiments, the locking mechanism 322 may be oriented such that the pin portion 342 selectively engages the aperture 318a.

Alternatively or in combination with the method 346, a locking pin 376, e.g., a wire lock pin, clevis pin, etc., may be received within the aperture 318a to provide a locking means between the attachment carriers 254 and the loader implement 258. In particular, the locking pin 376 may be associated with both protrusions 314 received through the aperture 318a. In other embodiments, the locking pin 376 may be utilized with one of protrusions 314 (i.e., the protrusion 314 not associated with the locking mechanism 322).

In further embodiments, an indicating mechanism can be coupled to the locking mechanism 322 indicating the unlocked position (FIG. 12) and/or the locked position (FIG. 17) to the operator. In particular, the indicating mechanism monitors when the pin portion 342 is fully received within the aperture 318b providing a locked signal, or when the pin portion 342 is fully disengaged from the aperture 318b providing an unlocked signal. For example, the indicating mechanism may be an electrical sensor that monitors a position of the pin portion 342 relative to the protrusion 314 or monitors the biasing force of the biasing member 330, e.g., via a pressure switch. Alternatively, the indicating mechanism can monitor relative contact between the pin portion 342 and the protrusion 314, which completes an electrical circuit once the pin portion 342 is received within the aperture 318b or breaks the electrical circuit once the pin portion 342 is displaced from the aperture 318b. The indicating mechanism can be electrically coupled to an indicator member (e.g., LED display) located within the cab 30.

## Claims

1. Utility vehicle (10) with a loader system (214), the utility vehicle (10) including a cab (30) configured to seat an operator for control of the utility vehicle (10), the loader system (214) comprising:
fixed frame members (242),
detachable frame members (246),
a loader boom (250),
a loader attachment implement (258);
a loader attachment carrier (254) to selectively couple the loader attachment implement (258) to the utility vehicle (10); and
a locking mechanism (322) including
an actuator (326) positioned adjacent the cab (30), wherein the actuator (326) is manually operable from the cab (30), and
a pin portion (342) adjacent the loader attachment implement (258) and movable in a first direction in response to actuation of the actuator (326) between a locked position and an unlocked position; wherein when the pin portion (342) is in a locked position, the loader attachment implement (258) uniformly moves with the loader attachment carrier (254), and when the pin portion (342) is in an unlocked position, the loader attachment implement (258) is non-uniformly movable with the loader attachment carrier (254), **characterized in that**
the locking mechanism (322) is attached to the loader system (214) and the mechanical actuator (326) is operably attached to one of the detachable frame members (246) adjacent the cab (30) to facilitate operator usage from the cab (30),
the actuator (326) includes a notch (378) located between an end portion (382) and a handle portion (386), wherein the end portion (382) and the notch (326) selectively engage a bracket (390) affixed to the detachable frame member (246), wherein
the actuator (326) is positionable in a locked position with the notch (378) contacting the bracket (390) or an unlocked position with the end portion (382) contacting or positioned adjacent the bracket (390), wherein
the actuator (326) is translatable in a first axial direction (332) away from the bracket (390) to permit rotation of the actuator (326) in a first rotational direction (328), and wherein
the actuator (326) is also rotatable in a second rotational direction (341) and thereafter movable in a second axial direction (336).

2. The utility vehicle (10) of claim 1, wherein the loader attachment implement (258) includes a protrusion (314) with a first aperture (318b) extending through the protrusion (314), the protrusion (314) configured to receive a portion of the pin portion (342) within the aperture (318b).

3. The utility vehicle (10) of claim 1 or 2, wherein the loader attachment carrier (254) includes an opening (290) configured to receive the protrusion (314) of the loader attachment implement (258).

4. The utility vehicle (10) of one of the claims 1 to 3, wherein the pin portion (342) is biased into the locked position by a biasing member.

5. The utility vehicle (10) of one of the claims 1 to 4, wherein the locking mechanism (322) includes a flexible cable assembly (334) coupling the actuator (326) and the pin portion (342).

6. The utility vehicle (10) of one of the claims 4 or 5, wherein the biasing member is a coil spring.

7. The utility vehicle (10) of one of the claims 5 or 6, wherein the cable assembly (334) comprises an inner cable body (340) within a sheath (344), with the inner cable (340) body slidable relative to the sheath (344).

## Patentansprüche

1. Nutzfahrzeug (10) mit einem Ladersystem (214), wobei das Nutzfahrzeug (10) ein Fahrerhaus (30) beinhaltet, in das sich eine Bedienperson zur Steuerung des Nutzfahrzeugs (10) setzen kann, wobei das Ladersystem (214) Folgendes umfasst:
feste Rahmenelemente (242),
lösbare Rahmenelemente (246),
einen Laderausleger (250),
eine Ladervorrichtungsausführung (258);
einen Ladervorrichtungsträger (254) zum selektiven Koppeln der Ladervorrichtungsausführung (258) am Nutzfahrzeug (10); und
einen Verriegelungsmechanismus (322), beinhaltend:
einen Aktuator (326), der an das Fahrerhaus (30) angrenzend positioniert ist, wobei der Aktuator (326) vom Fahrerhaus (30) aus manuell bedienbar ist, und
einen Stiftabschnitt (342), der an die Ladervorrichtungsausführung (258) angrenzt und in Reaktion auf eine Betätigung des Aktuators (326) zwischen einer verriegelten Stellung und einer entriegelten Stellung in einer ersten Richtung bewegbar ist; wobei, wenn sich der Stiftabschnitt (342) in einer verriegelten Stellung befindet, sich die Ladervorrichtungsausführung (258) gleichmäßig mit dem Ladervorrichtungsträger (254) bewegt, und, wenn sich der Stiftabschnitt (342) in einer unverriegelten Stellung befindet, Ladervorrichtungsausführung (258) ungleichmäßig mit dem Ladervorrichtungsträger (254) bewegbar ist, **dadurch gekennzeichnet, dass**
der Verriegelungsmechanismus (322) am Ladersystem (214) befestigt ist und der mechanische Aktuator (326) funktionell an einem der lösbaren Rahmenelemente (246) an das Fahrerhaus (30) angrenzend befestigt ist, um die Nutzung durch die Bedienperson vom Fahrerhaus (30) aus zu ermöglichen,
wobei der Aktuator (326) eine Einkerbung (378) beinhaltet, die sich zwischen einem Endabschnitt (382) und einem Griffabschnitt (386) befindet, wobei der Endabschnitt (382) und die Einkerbung (326) selektiv mit einer Halterung (390) in Eingriff stehen, die am lösbaren Rahmenelement (246) befestigt ist, wobei
der Aktuator (326) in einer verriegelten Stellung, wo die Einkerbung (378) mit der Halterung (390) in Kontakt steht, oder in einer unverriegelten Stellung, wo der Endabschnitt (382) mit der Halterung (390) in Kontakt steht oder an diese angrenzend positioniert ist, positionierbar ist, wobei
der Aktuator (326) in einer ersten axialen Richtung (332) weg von der Halterung (390) verschiebbar ist, um eine Drehung des Aktuators (326) in einer ersten Drehrichtung (328) zu ermöglichen, und wobei
der Aktuator (326) auch in einer zweiten Drehrichtung (341) drehbar ist und anschließend in einer zweiten axialen Richtung (336) bewegbar ist.

2. Nutzfahrzeug (10) nach Anspruch 1, wobei die Ladervorrichtungsausführung (258) einen Vorsprung (314) mit einer sich durch den Vorsprung (314) erstreckenden ersten Öffnung (318b) beinhaltet, wobei der Vorsprung (314) dazu gestaltet ist, einen Teil des Stiftabschnitts (342) innerhalb der Öffnung (318b) aufzunehmen.

3. Nutzfahrzeug (10) nach Anspruch 1 oder 2, wobei der Ladervorrichtungsträger (254) eine Öffnung (290) beinhaltet, die dazu gestaltet ist, den Vorsprung (314) der Ladervorrichtungsausführung (258) aufzunehmen.

4. Nutzfahrzeug (10) nach einem der Ansprüche 1 bis 3, wobei der Stiftabschnitt (342) durch ein Vorspannelement in die verriegelte Stellung vorgespannt ist.

5. Nutzfahrzeug (10) nach einem der Ansprüche 1 bis 4, wobei der Verriegelungsmechanismus (322) eine flexible Kabelanordnung (334) beinhaltet, die den Aktuator (326) und den Stiftabschnitt (342) koppelt.

6. Nutzfahrzeug (10) nach einem der Ansprüche 4 oder 5, wobei das Vorspannelement eine Schraubenfeder ist.

7. Nutzfahrzeug (10) nach einem der Ansprüche 5 oder 6, wobei die Kabelanordnung (334) einen inneren Kabelkörper (340) innerhalb einer Hülle (344) umfasst, wobei der innere Kabelkörper (340) relativ zur Hülle (344) verschiebbar ist.

## Revendications

1. Véhicule utilitaire (10) avec un système de chargeur (214), le véhicule utilitaire (10) comprenant une cabine (30) configurée pour asseoir un opérateur pour commander le véhicule utilitaire (10), le système de chargeur (214) comprenant :
des éléments de châssis fixes (242),
des éléments de châssis détachables (246),
une flèche de chargeur (250),
un outil de fixation de chargeur (258) ;
un support de fixation de chargeur (254) pour accoupler sélectivement l'outil de fixation de chargeur (258) au véhicule utilitaire (10) ; et
un mécanisme de verrouillage (322) comprenant
un actionneur (326) positionné près de la cabine (30), l'actionneur (326) pouvant être actionné manuellement depuis la cabine (30), et
une partie de broche (342) adjacente à l'outil de fixation de chargeur (258) et mobile dans une première direction en réponse à l'actionnement de l'actionneur (326) entre une position verrouillée et une position déverrouillée ; lorsque la partie de broche (342) est dans une position verrouillée, l'outil de fixation de chargeur (258) se déplaçant uniformément avec le support de fixation de chargeur (254) et lorsque la partie de broche (342) est dans une position déverrouillée, l'outil de fixation de chargeur (258) étant mobile non uniformément avec le support de fixation de chargeur (254), **caractérisé en ce que**
le mécanisme de verrouillage (322) est fixé au système de chargeur (214) et l'actionneur mécanique (326) est fixé de manière opérationnelle à l'un des éléments de châssis amovibles (246) adjacents à la cabine (30) pour faciliter l'utilisation du conducteur depuis la cabine (30),
l'actionneur (326) comprend une encoche (378) située entre une partie d'extrémité (382) et une partie de poignée (386), la partie d'extrémité (382) et l'encoche (326) engageant sélectivement un support (390) fixé sur l'élément de châssis amovible (246), où
l'actionneur (326) peut être positionné dans une position verrouillée avec l'encoche (378) en contact avec le support (390) ou dans une position déverrouillée avec la partie d'extrémité (382) en contact ou positionnée adjacente au support (390), dans lequel
l'actionneur (326) peut être déplacé dans une première direction axiale (332) à l'écart du support (390) pour permettre la rotation de l'actionneur (326) dans une première direction de rotation (328), et dans lequel
l'actionneur (326) est également rotatif dans une seconde direction de rotation (341) et ensuite mobile dans une seconde direction axiale (336).

2. Véhicule utilitaire (10) selon la revendication 1, dans lequel l'outil de fixation de chargeur (258) comprend une saillie (314) avec une première ouverture (318b) s'étendant à travers la saillie (314), la saillie (314) étant configurée pour recevoir une partie de la partie de broche (342) dans l'ouverture (318b).

3. Véhicule utilitaire (10) selon la revendication 1 ou 2, dans lequel le support de fixation de chargeur (254) comprend une ouverture (290) configurée pour recevoir la saillie (314) de l'outil de fixation de chargeur (258).

4. Véhicule utilitaire (10) selon l'une des revendications 1 à 3, dans lequel la partie de broche (342) est sollicitée en position verrouillée par un élément de sollicitation.

5. Véhicule utilitaire (10) selon l'une des revendications 1 à 4, dans lequel le mécanisme de verrouillage (322) comprend un ensemble de câble flexible (334) couplant l'actionneur (326) et la partie de broche (342).

6. Véhicule utilitaire (10) selon l'une des revendications 4 ou 5, dans lequel l'élément de sollicitation est un ressort hélicoïdal.

7. Véhicule utilitaire (10) selon l'une des revendications 5 ou 6, dans lequel l'ensemble de câble (334) comprend un corps de câble intérieur (340) dans une gaine (344), le corps de câble intérieur (340) pouvant glisser par rapport à la gaine (344).
